# EUROPÄISCHE PATENTSCHRIFT

(11) **EP 1 166 474 B1**
(45) Veröffentlichungstag und Bekanntmachung des Hinweises auf die Patenterteilung: **24.11.2004**
(21) Anmeldenummer: 00925129.9
(22) Anmeldetag: 21.03.2000
(51) Int. Cl.: H04B 10/18, G02B 6/34

(54) **VERFAHREN ZUR DISPERSIONSKOMPENSATION GEMEINSAM ÜBERTRAGENER OPTISCHER SIGNALE MIT UNTERSCHIEDLICHEN WELLENLÄNGEN MITTELS PHOTONISCHER KRISTALLE**
METHOD USING PHOTONIC CRYSTALS FOR THE DISPERSION COMPENSATION OF OPTICAL SIGNALS OF DIFFERENT WAVELENGTHS WHICH ARE TRANSMITTED TOGETHER
PROCEDE PERMETTANT, AU MOYEN DE CRISTAUX PHOTONIQUES, DE COMPENSER LA DISPERSION DE SIGNAUX OPTIQUES DE DIFFERENTES LONGUEURS D'ONDE TRANSMIS ENSEMBLE

(30) Priorität: 26.03.1999 DE 19915139
(43) Veröffentlichungstag der Anmeldung: 02.01.2002
(73) Patentinhaber: Deutsche Telekom AG, 53113 Bonn (DE)
(72) Erfinder: HEITMANN, Walter, D-64401 Gross-Biberau (DE); KOOPS, Hans, W., P., D-64372 Ober-Ramstadt (DE)
(86) Internationale Anmeldenummer: PCT/EP2000/002479
(87) Internationale Veröffentlichungsnummer: WO 2000/059140

(56) Entgegenhaltungen:
- EP-A- 0 753 944
- WO-A-99/00956
- US-A- 5 802 236
- KOOPS H W P: "PHOTONIC CRYSTALS BUILT BY THREE-DIMENSIONAL ADDITIVE LITHOGRAPHY ENABLE INTEGRATED OPTICS OF HIGH DENSITY" PROCEEDINGS OF THE SPIE,US,SPIE, BELLINGHAM, VA, Bd. 2849, 5. August 1996 (1996-08-05), Seiten 248-256, XP000617864

## Beschreibung

Die Erfindung bezieht sich auf das Gebiet der Dispersionskompensation gemeinsam übertragener optischer Signale mit unterschiedlichen Wellenlängen in optischen Nachrichtennetzen.
In den bisher aufgebauten optischen Nachrichtennetzen wurden fast ausschließlich Standard-Einmodenfasern mit einer Dämpfung von etwa 0,4dB/km und einem Dispersionsminimum bei 1310 nm installiert.
In zunehmenden Maße wird der Wellenlängenbereich um 1550 nm für die optische Nachrichtenübertragung genutzt. Gründe dafür sind die geringere Dämpfung von ca. 0,2dB/km, der zunehmende Einsatz von Wellenlängenmultiplex-Übertragung und die Verfügbarkeit eines praktisch ausgereiften Faserlichtverstärkers, des EDFA (Erbium Doped Fiber Amplifier), mit dem in einem breiten Bereich um 1550 nm viele Kanäle gleichzeitig verstärkt werden können.
Ein Mangel der o. g. Lösung besteht darin, daß die Übertragungsbandbreite und die Verstärkerabstände durch die hohe Dispersion von Standard-Einmodenfasern, bei 1550 nm von etwa 17 ps/nm x km, begrenzt wird. Für längere Übertragungsstrecken und Bandbreiten im Gb/s-Bereich ist deshalb der Einbau dispersionskompensierender Elemente erforderlich.
Bekannt ist die Verwendung von dispersionskompensierenden Fasern (DCF/Dispersion Compensating Fibers), die eine hohe negative Dispersion aufweisen. Als typischer Wert für die Dispersion einer DCF werden -100ps/nm x km angegeben. Um die Dispersion einer 100 km langen Standard-Einmodenfaser zu kompensieren, werden demnach 17 km DCF benötigt. Die Kompensationsfasern werden auf Spulen gewickelt, deren Durchmesser zur Vermeidung von Krümmungsverlusten mindestens 10 cm betragen muß. Die Dispersionskompensation mit einer dispersionskompensierenden Faser DCF weist mehrere Nachteile auf:
- Es wird eine große Länge einer relativ teueren Spezialfaser benötigt.
- Die Faserspule besitzt große Abmessungen. Das kann in Verstärkerstellen oder Kabelschächten, besonders bei vieladrigen optischen Kabeln, zu Problemen führen.
- Es wird eine Zusatzdämpfung eingefügt. Dispersionskompensierende Fasern haben wegen ihrer speziellen Kernstruktur eine Dämpfung von ca. 0,5dB/km, d.h. bei 17 km Faserlänge ergibt sich eine Dämpfung von etwa 9dB.

Die oben beschriebenen Eigenschaften und Einsatzmöglichkeiten von dispersionskompensierenden Fasern DCF sowie Wellenlängenmultiplex-Übertragung und Faserlichtverstärker sind ausführlich in "Optische Telekommunikationssysteme" von H. Hultzsch, Damm Verlag Gelsenkirchen (1996) S. 123 und S. 296 -298 beschrieben.

Ein weiteres Verfahren zur Dispersionskompensation (siehe ebenfalls in "Optische Telekommunikationssysteme" von H. Hultzsch, Damm Verlag Gelsenkirchen (1996) Seite 152 - 153 ) beruht auf dem Einsatz von Fasergittern. Für eine Dispersionskompensation über breite Wellenlängenbereiche - z.B. den EDFA - Bereich von 1530 nm - 1570 nm - werden allerdings Fasergitter mit Längen von etwa 1 Meter benötigt. Die Herstellung sehr langer Fasergitter mit den erforderlichen Toleranzen im Hinblick auf die Gitterkonstanten und der notwendigen Langzeitstabilität ist kostspielig und befindet sich noch im Entwicklungsstadium.

Die technische Aufgabe der Erfindung ist auf eine wirtschaftliche Lösung mit geringem Raumbedarf zur Dispersionskompensation gemeinsam übertragener optischer Signale mit unterschiedlichen Wellenlängen λ ausgerichtet.

Die erfindungsgemäße Lösung basiert auf dem Einsatz von photonischen Kristallen. Photonische Kristalle sind periodische Anordnungen von dielektrischen Materialien mit hoher und niedriger Dielektrizitätskonstante, angeordnet im Wechsel als ein-, zwei- oder dreidimensionale Gitter mit Perioden von λ/3 und Stab- bzw. Kubusdurchmessern von λ/6.

Siehe J. D. Joannopoulus et al.: Photonic crystals: molding the flow of light, ISBN 0-691-03 744-2 (1995).
Erfindungsgemäß werden gemeinsam mit verschiedenen Wellenlängen übertragene optische Signale, die nach dem Durchlaufen eines Leitungsabschnitts dispersionsbedingte Laufzeitunterschiede aufweisen, über einen faseroptischen Eingang E in eine als Netzwerk ausgebildete Anordnung eingekoppelt, welche aus nacheinender auf einem Lichtwellenleiter 2 angeordneten photonischen Kristallen K1 bis Kn besteht. Die photonischen Kristalle K1 bis Kn sind damit optisch miteinander verbunden. Die photonischen Kristalle K1 bis Kn sind so ausgebildet, daß sie Signale einer bestimmten Wellenlänge reflektieren bzw. umleiten und Signale mit anderen Wellenlängen ungeschwächt durchlassen. Beispielsweise ist der erste photonische Kristall K1 so ausgebildet, daß er ausschließlich die Signale einer ersten Wellenlänge reflektiert. Optische Signale anderer Wellenlängen werden durch den photonischen Kristall K1 ungeschwächt durchgelassen und in den nachgeordneten photonischen Kristall K2 eingekoppelt. Der nachgeordnete zweite photonische Kristall K2 reflektiert von den durch den ersten photonischen Kristall K1 durchgelassenen Signalen wiederum nur die Signale einer zweiten Wellenlänge und läßt ebenfalls die Signale mit anderen Wellenlängen passieren. Entsprechend diesem Prinzip wird das Signal solange von einem photonischen Kristall zu einem weiteren photonischen Kristall weitergeleitet bis die Signale aller Wellenlängen von den ihnen zugeordneten photonischen Kristallen K1 bis Kn reflektiert worden sind.
Da der Wert der positiven Dispersion der in den faseroptischen Eingang eingekoppelten Signale für die einzelnen Wellenlängen bekannt ist, werden in der aus nacheinander angeordneten photonischen Kristallen K1 bis Kn bestehenden Anordnung für die einzelnen Wellenlängen entsprechende, mit negativer Dispersion behaftete Wegstrecken definiert, die so bemessen sind, daß die Dispersionsunterschiede der Signale der einzelnen Wellenlängen zielgerichtet verändert bzw. vollständig aufgehoben werden. Bevor das Signal einer definierten Wellenlänge in einem der nacheinander angeordneten photonischen Kristalle K1-Kn reflektiert wird, hat es bereits eine Wegstrecke bis zum die definierte Wellenlänge reflektierenden Element im photonischen Kristall zurückgelegt, die mit einer entsprechenden negativen Dispersion beaufschlagt ist. Diese Wegstrecke ist durch den Abstand zwischen dem faseroptischen Eingang E und dem Reflexionsspiegel im betreffenden photonischen Kristall K1 bis Kn definiert.
Die von den photonischen Kristallen reflektierten dispersionskompensierten Signale unterschiedlicher Wellenlängen werden zur weiteren Übertragung mittels einer geeigneten Baugruppe, wie beispielsweise einem optischen Zirkulator 1, wieder in einen gemeinsamen faseroptischen Ausgang A eingekoppelt.

Das erfindungsgemäße Verfahren wird anhand von 5 Ausführungsbeispielen näher erläutert.
Ausgehend davon, daß optische Signale, die mit verschiedenen Wellenlängen λᵢ, z.B. 3 Wellenlängen λᵢ, λᵢ₊₁, λᵢ₊₂, übertragen werden, nach dem Durchlaufen eines Leitungsabschnitts dispersionsbedingte Laufzeitunterschiede aufweisen, sind die Ausführungsformen insbesondere darauf ausgerichtet, diese Laufzeitunterschiede wieder auszugleichen. Optional beinhalten diese Lösungen jedoch auch immer die Möglichkeit, für die Signale der einzelnen Wellenlängen, beipielsweise für die Wellenlängen λᵢ, λᵢ₊₁, λᵢ₊₂ , eine Vorverzerrung mit definierten Laufzeitdifferenzen einzustellen.

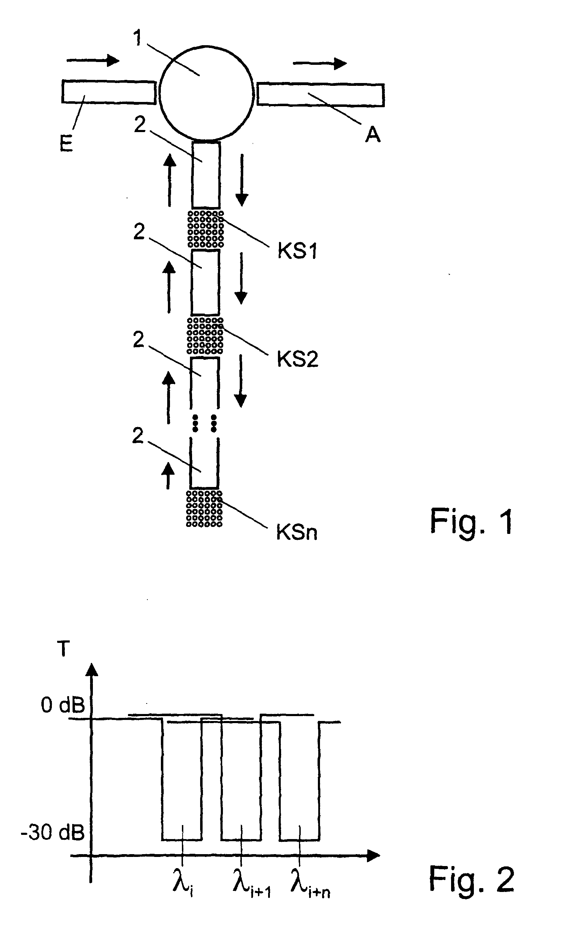

In Fig. 1 ist eine Anordnung zur Dispersionskompensation dargestellt, bei der die mit Laufzeitdifferenzen behafteten optischen Signale über einen gemeinsamen faseroptischen Eingang E in einen optischen Zirkulator 1 eingekoppelt werden. Vom optischen Zirkulator 1 werden die mit Laufzeitdifferenzen behafteten optischen Signale in eine Baugruppe eingekoppelt, die aus nacheinander auf einem Wellenleiter 2 als selektive Reflexionsfilter angeordneten photonischen Kristallen KS 1 bis KSn besteht.

Dabei ist jeder der photonischen Kristalle KS 1 bis KSn so eingestellt, daß er von den über den optischen Zirkulator 1 eingekoppelten Signalen nur die Signale einer bestimmten Wellenlänge reflektiert, die Signale der anderen Wellenlängen aber durchläßt. Welcher photonische Kristall KS1 bis KSn für welche Wellenlänge als Reflexionsfilter ausgebildet ist, ist abhängig von der konkreten Laufzeitdifferenz der Signale der jeweiligen Wellenlänge. Je größer die Laufzeitdifferenz ist, desto größer muß auch der optische Weg sein, den das Signal bis zur vollständigen Dispersionskompensation zurücklegen muß.

Dieser Weg läßt sich exakt bemessen. In einem Ausführungsbeispiel mit beispielsweise drei unterschiedlichen Wellenlängen würde das bedeuten, daß der photonische Kristall KS1 nur die Signale der Wellenlänge λᵢ zum optischen Zirkulator 1 reflektiert .Das Licht der Wellenlängen λ_{i+1,} λᵢ₊2 wird durch den photonischen Kristall KS1 ungeschwächt zum photonischen Kristall KS2 durchgelassen. Der photonische Kristall KS2 ist so eingestellt, daß er nur die Signale der Wellenlänge λᵢ₊₁ reflektiert. Die Signale der Wellenlänge λᵢ₊2 werden ungeschwächt zum photonischen Kristall KS3 durchgelassen. Der photonische Kristall KS3 ist so eingestellt, daß er nur die Signale der Wellenlänge λᵢ₊2 reflektiert. Damit sind alle über den optischen Zirkulator 1 eingekoppelten Signale wieder zum optischen Zirkulator 1 reflektiert worden. Vom optischen Zirkulator 1 werden die nunmehr dispersionskompensierten Signale der drei Wellenlängen λ_{i,} λᵢ₊₁ und λᵢ₊2 wieder in den gemeinsamen faseroptischen Ausgang A eingekoppelt und über entsprechende nachgeordnete Einrichtungen weiter übertragen.

Figur 2 zeigt die Transmission in Abhängigkeit von der Wellenlänge für die drei als selektive Reflexionsfilter ausgebildeten photonischen Kristalle KS1-KS3.

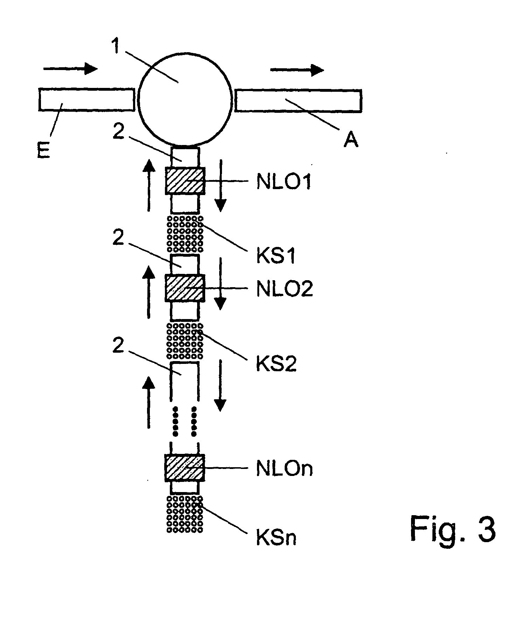

Die in Figur 3 abgebildete Ausführungsform unterscheidet sich von der Lösung nach Fig. 1 dadurch, daß in die Wellenleiter 2 zwischen den als selektive Reflexionsfilter ausgebildeten photonischen Kristallen KS1-KSn zusätzlich einstellbare Dispersionsschieber NL01-NL0n eingefügt sind. Durch die einstellbaren Dispersionsschieber NL01-NL0n wird zusätzlich zu den mit negativer Dispersion behafteten festen Wegstrecken eine weiterer Dispersionsausgleich möglich. Die Dispersionsschieber NL01-NL0n werden dabei vorzugsweise so eingestellt, daß die Summe von fester und einstellbarer Dispersionsverschiebung die Dispersionsunterschiede zwischen den einzelnen Wellenlängen ausgleicht.

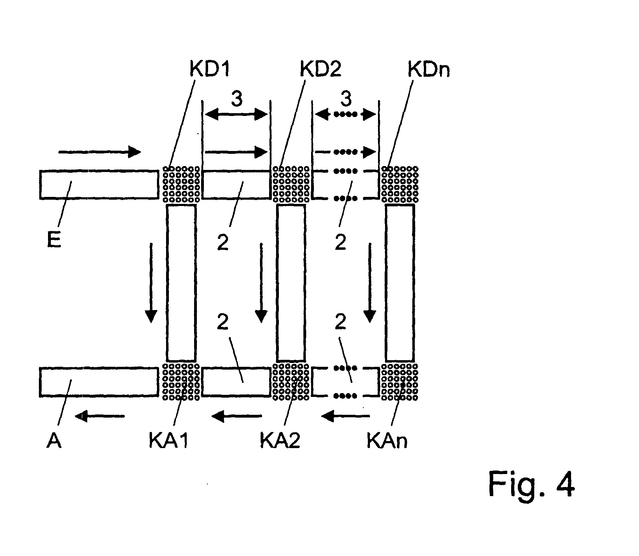

Die in Figur 4 abgebildete dispersionskompensierende Anordnung ist auf eine Ausführungsform ausgerichtet, die ohne optischen Zirkulator 1 arbeitet. Die photonischen Kristalle KD1 bis KDn sind bei diesem Beispiel auf die Umlenkung von Signalen einer bestimmten Wellenlänge eingestellt. Konkret sind die nacheinander auf dem Wellenleiter 2 angeordneten photonischen Kristalle KD1 bis KDn als Drop-Filter ausgebildet, welche optische Signale einer gewünschten Wellenlänge aus dem Wellenleiter 2 seitlich herauslenken und optische Signale anderer Wellenlängen zum nachgeordneten photonischen Kristall passieren lassen. Die seitlich entsprechend ihrer Wellenlänge von den als Drop-Filter ausgebildeten photonischen Kristallen KD1 bis KDn herausgefilterten Signale werden über Wellenleiterabschnitte zu den als Addierer ausgebildeten photonischen Kristallen KA1 bis KAn optisch übertragen und gemeinsam über den faseroptischen Ausgang A wieder zur weiteren Übertragung eingekoppelt. Durch die beschriebene Anordnung wird der im ersten Ausführungsbeispiel noch benötigte optische Zirkulator 1 eingespart. Am Ausgang des als Addierer ausgebildeten photonischen Kristalles KA1 liegen die Signale der verschiedenen Wellenlängen ohne Laufzeitdifferenzen wieder vor. Die in Figur 4 abgebildete Anordnung zur Dispersionskompensation mit den als Drop-Filter ausgebildeten photonischen Kristallen KD1 bis KDn und den als Addierer ausgebildeten photonischen Kristallen KA1 bis KAn ist zur Dispersionskompensation der Signale der unterschiedlichen Wellenlängen, entsprechend der zu erwartenden Dispersion in geeigneten geometrischen Abständen 3, aufgebaut. Die Anordnung ist dabei mit unterschiedlicher Transmission (Wellenlänge 1 bis Wellenlänge n) aufgebaut, die durch die Bauweise und die Periodenabstände der Wellenleiter 2 ausgewählt wird. Die Wellenleiter 2 sind unterbrochen durch Bereiche, in welchen die Signale entsprechend ihrer Wellenlänge λᵢ , bedingt durch die Geometrie des Drei-Terminal-Bereichs, aus den photonischen Kristallen KD1- KDn ausgekoppelt und in die entsprechenden als Addierer ausgebildeten photonischen Kristalle KA1-KAn wieder eingekoppelt und addiert werden. Alle Signale werden dann wieder in den faseroptischen Ausgang A eingekoppelt. Damit wird erreicht, daß die durch Dispersion verursachte Laufzeitverschiebung für alle Signale ausgeglichen wird. Für die verschiedenen Strecken des Netzes müssen, wie bei allen Techniken zur Dispersionskompensation, speziell angepasste Bauteile hergestellt und eingebaut werden. Eine gewisse Standardisierung kann beispielsweise auch durch genormte Abstände zwischen den Stationen erreicht werden, in denen die Dispersionkompensation vorgenommen wird.

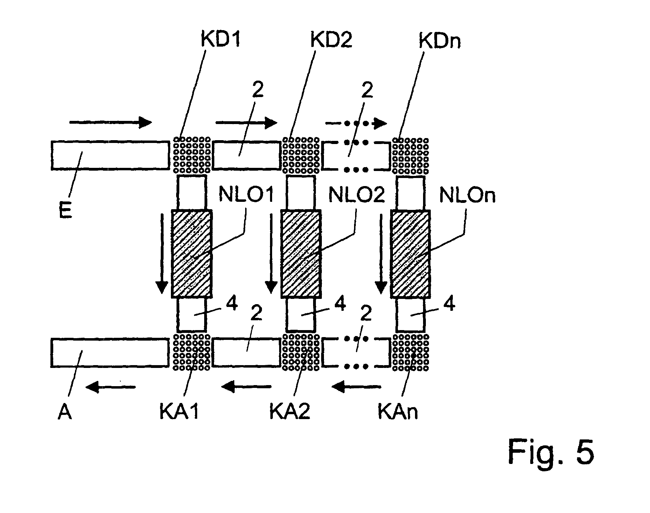

In Figur 5 ist eine Anordnung dargestellt, die im wesentlichen der Anordnung nach Figur 4 entspricht. Diese Anordnung besteht ebenfalls aus dem faseroptischen Eingang E, den auf dem Wellenleiter 2 angeordneten als Drop-Filter ausgebildeten photonischen Kristallen KD1bis KDn, den als Addierer ausgebildeten photonischen Kristallen KA1-KAn und dem gemeinsamen faseroptischen Ausgang A.
Zusätzlich sind auf den optischen Wegen zwischen den umlenkenden Ausgängen der als Drop-Filter ausgebildeten photonischen Bauelemente KD1 bis KDn und den Eingängen der als Addierer ausgebildeten photonischen Bauelemente KA1 bis KAn Dispersionsschieber NLO1 bis NLOn angeordnet, deren dispersionsverschiebende Wirkung sich für jede Wellenlänge individuell einstellen läßt, bevor das Signal über die als Addierer ausgebildeten photonischen Kristalle KA1 bis KAn in den gemeinsamen faseroptischen Ausgang A zurückgeführt wird. Die gewünschte Dispersion wird durch das Anlegen von unterschiedlichen Spannungen an den Dispersionsschiebern NL01-NL0n oder durch die Einwirkung über andere physikalische Parameter, wie beispielsweise Temperatur, Magnetfeld usw., eingestellt. Die Dispersionsschieber NL01-NL0n können dabei mit einer oder mehreren Spannungen beaufschlagt sein und aus mehreren nichtlinear optischen Materialien bestehen. Vorzugsweise werden die Dispersionsschieber NLO1 bis NLOn über planare Wellenleiter 4 oder auch über photonische Kristall-Wellenleiter jeweils mit den ihnen als Addierer zugeordneten photonischen Kristallen KA1 bis KAn verbunden. Durch die Wahl geeigneter Materialien und die Bemessung der Spannung für die einzelnen Wellenlängen ist es möglich, die gewünschte zusätzliche Dispersion grob oder auch fein abzustimmen. Derartige nichtlinear optische Elemente NLO ermöglichen es, daß die Anordnung nach Figur 5 in gewissen Grenzen an die jeweiligen Einsatzbedingungen angepaßt werden kann. Damit ist eine Anordnung nach Figur 5 universell einsetzbar. Nichtlineare optische Dispersionsschieber NL01-NL0n können beispielsweise aus photonischen Kristallstrukturen bestehen, die mit Flüssigkristallen gefüllt sind. Denkbar ist auch die Verwendung von mit nichtlinear optischen Polymeren gefüllten photonischen Kristallstab- oder Lochstrukturen, die in einem elektrischen Feld aufgebaut werden, welches entsprechend der erforderlichen nichtlinear-optischen Dispersionsverschiebung eingestellt wird. Die konkrete nichtlinear-optische Dispersionsverschiebung wird dabei in Abhängigkeit von der Kompensationsweglänge für die einzelnen Wellenlängen ermittelt.

Werden die Dispersionsschieber NLO1 bis NLOn zwischen den als Drop-Elemente ausgebildeten photonischen Kristallen KD1-KDn und den als Addierer wirkenden photonischen Kristallen KA 1 bis KAn optisch eingefügt, so erfolgt die Abstimmung für jede Wellenlänge separat. Diese Anordnung erlaubt daher eine individuelle Abstimmung der erforderlichen Dispersionsverschiebung für jede einzelne Wellenlänge.

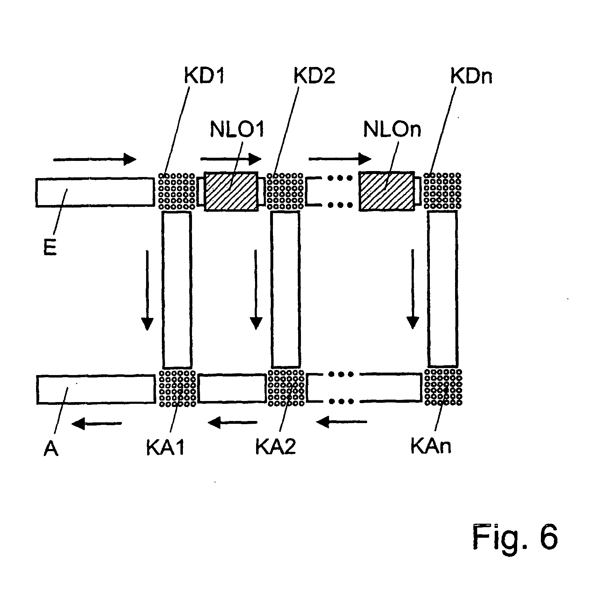

Alternativ dazu können in einer weiteren vorteilhaften Ausführungsform, entsprechend Figur 6, beispielsweise die Dispersionsschieber NLO1 bis NLOn im optischen Weg (Wellenleiter 2) zwischen den einzelnen als Drop-Filtem ausgebildeten photonischen Kristallen K D1-KDn angeordnet werden. In diesem Fall wirken die Dispersionsschieber NLO1-NLOn auf verschiedene Wellenlängen gleichzeitig. Die Wirkung der Dispersionsschieber NLO1 bis NLOn addiert sich dabei für die unterschiedlichen Wellenlängen von Dispersionsschieber zu Dispersionsschieber. Die Rückführung der Signale erfolgt wieder über die Wellenleiter zwischen den als Drop-Filter ausgebildeten photonischen Kristallen KD1-KDn und den als Addierer ausgebildeten photonischen Kristallen KA1-KAn, die die Signale addieren und wieder in den faseroptischen Ausgang A zurückführen.
Durch die erfindungsgemäße Lösung können photonische Kristall-Add-Drop-Filter hoher Güte aufgebaut werden, die ungefähr 1000 mal kürzer als herkömmliche Beugungsgitter sind, welche als Chirped Gratings aufgebaut sind und eine Länge von ca. 100 cm aufweisen. Mittels der erfindungsgemäßen Lösung ist der Aufbau einer Anordnung zur Dispersionskompensierung möglich, die auf einem einzigen, wenige cm großen Chip untergebracht ist. Dieses Chipbauelement hat den Vorteil einer höheren Temperaturstabilität, so daß es auch für größere Temperaturbereiche eingesetzt werden kann. Zum anderen entfällt bei den Ausführungsformen nach den Figuren 4, 5 und 6 der kostenintensive Zirkulator 2. Abgesehen von der besseren Handhabung ist die erfindungsgemäße Lösung auch wesentlich preiswerter als eine Lösung, die auf den bekannten, herkömmlichen Strukturen beruht. Durch die elektrisch einstellbaren Dispersionsschieber NLO1 bis NLOn kann die Lösung auch bei verschiedenen Streckenlängen individuell an die jeweiligen Erfordernisse angepaßt werden.

Die praktische Ausführung der erfindungsgemäßen Anordnung zur Dispersionskompensation läßt sich in Festkörperwellenleitertechnik mittels 3-dimensionaler additiver Lithografie oder durch elektrolytisches, lichtunterstütztes Ätzen von Silizium mit geeigneter Strukturierung der Lochmaske realisieren.

### Bezugszeichenaufstellung

- E: Faseroptischer Eingang
- A: Faseroptischer Ausgang
- 1: Optischer Zirkulator
- 2: Wellenleiter
- 3: geometrische Abstände der photonischen Kristalle
- 4: planare Wellenleiter
- K1-Kn: photonische Kristalle
- KS1-KSn: als selektive Reflexionsfilter ausgebildete photonische Kristalle
- KD1-KDn: als Drop-Elemente ausgebildete photonische Kristalle
- KA1-KAn: als Addierer ausgebildete photonische Kristalle
- NLO1-NLO4: Dispersionsschieber
- λ: Wellenlänge

## Patentansprüche

1. Verfahren zur Dispersionskompensation gemeinsam übertragener optischer Signale mit unterschiedlichen Wellenlängen, **dadurch gekennzeichnet,**
**daß** die übertragenen optischen Signale gemeinsam in eine Anordnung eingekoppelt werden, die aus nacheinander auf mindestens einem Wellenleiter (2) angeordneten, optisch miteinander verbundenen photonischen Kristallen (K1-Kn) besteht, daß in jedem photonischen Kristall jeweils nur die Signale einer Wellenlänge reflektiert bzw. umgeleitet und die Signale der anderen Wellenlängen ungeschwächt zum nachgeordneten photonischen Kristall durchgelassen werden,
wobei für die Signale jeder Wellenlänge gilt, daß die Wegstrecke von der Stelle der Einkopplung bis zur Stelle im jeweiligen photonischen Kristall (K1-Kn), an der sie reflektiert bzw. umgeleitet werden, mit einer negativen Dispersion beaufschlagt ist, welche die positive Dispersion der eingekoppelten Signale verändert bzw. ganz aufhebt, und daß anschließend die resultierenden Signale aller Wellenlängen gemeinsam weiter übertragen werden.

2. Verfahren nach Anspruch 1, **dadurch gekennzeichnet,**
**daß** durch in den Wellenleiter (2) eingefügte Dispersionsschieber (NLO1-NLOn) Dispersionsunterschiede in den durch die Dispersionsschieber (NLO1-NLOn) vorgegebenen Grenzen ausgeglichen werden können.

3. Anordnung zur Dispersionskompensation gemeinsam übertragener optischer Signale mit unterschiedlichen Wellenlängen, **dadurch gekennzeichnet,**
**daß** sie aus den nacheinander angeordneten photonischen Kristallen (K1-Kn) besteht, wobei jeder Wellenlänge in Abhängigkeit von ihrer Dispersion ein photonischer Kristall (K1-Kn) fest zugeordnet ist,
**daß** die photonischen Kristalle (K1-Kn) auf mindestens einem gemeinsamen Lichtwellenleiter (2) angeordnet sind,
**daß** jeder photonische Kristall (K1-Kn) so eingestellt ist, daß er die Signale einer Wellenlänge reflektiert bzw. umlenkt und die Signale anderer Wellenlängen ungeschwächt durchläßt, wobei die Wegstrecke von der Einkopplung bis zur Stelle im jeweiligen photonischen Kristall (K1-Kn), an der die Signale reflektiert bzw. umgelenkt werden, mit einer negativen Dispersion beaufschlagt ist, welche die positive Dispersion der eingekoppelten Signale kompensiert, und
**daß** die photonischen Kristalle optisch mit mindestens einer Baugruppe verbunden sind, welche die reflektierten bzw. umgelenkten Signale aller Wellenlängen wieder für die weitere Übertragung bereitstellt.

4. Anordnung zur Dispersionskompensation nach Anspruch 3,
**dadurch gekennzeichnet,**
**daß** sie aus mindestens zwei nacheinander auf einem Wellenleiter (2) angeordneten, als selektive Reflexionsfilter ausgebildeten photonischen Kristallen (KS1 bis KS2) besteht, welche über einen optischen Zirkulator (1) mit dem faseroptischen Eingang (E) und dem faseroptischen Ausgang (A) verbunden sind, und
**daß** der erste photonische Kristall (KS1) als Refleoionsfilter für die erste Wellenlänge (λᵢ) und der zweite photonische Kristall (KS2) als Reflexionsfilter für die zweite Wellenlänge (λᵢ₊₁) ausgebildet ist.

5. Anordnung nach Anspruch 3 und 4, **dadurch gekennzeichnet,**
**daß** zur gleichzeitigen Grob- bzw. Feinabstimmung der negativen Dispersion für verschiedene Wellenlängen zwischen den als selektive Reflexionsgitter ausgebildeten photonischen Kristallen (KS1-KSn) regelbare Dispersionsschieber NLO1 bis NLOn aus nichtlinearen optischen Materialien optisch eingekoppelt sind.

6. Anordnung zur Dispersionskompensation nach Anspruch 3 und 4
**dadurch gekennzeichnet,**
**daß** der Wellenleiter (2) aus zwei gegenüberliegenden Teilabschnitten besteht, wobei der erste Teilabschnitt dem faseroptischen Eingang (E) und der zweite Teilabschnitt dem faseroptischen Ausgang (A) zugeordnet ist, und daß auf dem ersten Faserabschnitt (2) nacheinander mindestens zwei als Drop-Elemente ausgebildete photonische Kristalle (KD1und KD2) mit Ausgängen zur seitlichen Abweisung von Signalen einer Wellenlänge angeordnet sind, und daß auf dem zweiten Faserabschnitt nacheinander mindestens zwei als Addierer ausgebildete photonische Bauelemente (KA1;KA2) angeordnet sind, wobei jeder der als Drop-Element ausgebildeten photonischen Kristalle (KD1;KD2) über seinen Ausgang zur seitlichen Abweisung optisch mit dem ihm gegenüberliegenden Eingang des als Addierer ausgebildeten photonischen Kristalls (KA1;KA2) verbunden ist.

7. Anordnung nach Anspruch 3 und 6, **dadurch gekennzeichnet,**
**daß** zur Grob- bzw Feinabstimmung der negativen Dispersion jeder einzelnen Wellenlänge in die optischen Verbindungen zwischen den seitlich angeordneten Ausgängen der als Drop-Elemente ausgebildeten photonischen Kristalle (KD1-KDn) und den als Addierer ausgebildeten photonischen Kristallen (KA1-KAn) regelbare Dispersionsschieber NLO1 bis NLOn aus nichtlinearen optischen Materialien optisch eingekoppelt sind.

8. Anordnung nach Anspruch 3 und 6, **dadurch gekennzeichnet,**
**daß** zur gleichzeitigen Grob- bzw. Feinabstimmung der negativen Dispersion für verschiedene Wellenlängen in den ersten Wellenleiterabschnitt (2) vor den als Drop-Filter ausgebildeten photonischen Kristallen (K3 bis K4) regelbare Dispersionsschieber (NLO1-NLO3) aus nichtlinear optischem Material optisch eingekoppelt sind.

## Claims

1. Method for the dispersion compensation of collectively transmitted optical signals with different wavelengths, **characterized in that**
the transmitted optical signals are coupled collectively into an arrangement consisting of optically interconnected photonic crystals (K1-Kn) disposed consecutively on at least one waveguide (2);
**in that**, in each photonic crystal, only the signals of one wavelength are reflected or diverted and the signals of the other wavelengths are allowed through without attenuation to the following photonic crystal;
it being the case for the signals of each wavelength that the distance from the site of incoupling to the site in the respective photonic crystal (K1-Kn) at which the signals are reflected or diverted is subject to a negative dispersion, said negative dispersion changing or completely cancelling out the positive dispersion of the incoupled signals; and **in that**, subsequently, the resulting signals of all wavelengths are collectively onward-transmitted.

2. Method according to claim 1, **characterized in that**
dispersion sliders (NLO1-NLOn) inserted into the waveguide (2) are able to compensate dispersion differences within the limits set by the dispersion sliders (NLO1-NLOn).

3. Arrangement for the dispersion compensation of collectively transmitted optical signals with different wavelengths, **characterized in that**
said arrangement consists of the consecutively disposed photonic crystals (K1-Kn), each wavelength being permanently associated with a photonic crystal (K1-Kn) as a function of its dispersion;
**in that** the photonic crystals (K1-Kn) are disposed on at least one common optical waveguide (2);
**in that** each photonic crystal (K1-Kn) is so adjusted as to reflect or divert the signals of one wavelength and to allow through without attenuation the signals of other wavelengths, the distance from the site of incoupling to the site in the respective photonic crystal (K1-Kn) at which the signals are reflected or diverted being subject to a negative dispersion, said negative dispersion compensating the positive dispersion of the incoupled signals; and **in that**
the photonic crystals are optically connected to at least one component which again readies the reflected or diverted signals of all wavelengths for onward-transmission.

4. Arrangement for dispersion compensation according to claim 3,
**characterized in that**
said arrangement consists of at least two photonic crystals (KS1 to KS2) disposed consecutively on a waveguide (2) and in the form of selective reflection filters, said photonic crystals (KS 1 to KS2) being connected through an optical circulator (1) to the fibre optic input (E) and to the fibre optic output (A); and **in that**
the first photonic crystal (KS1) is in the form of a reflection filter for the first wavelength (λᵢ) and the second photonic crystal (KS2) is in the form of a reflection filter for the second wavelength (λᵢ₊₁).

5. Arrangement according to claims 3 and 4, **characterized in that**
for simultaneous coarse and fine tuning of the negative dispersion for different wavelengths, controllable dispersion sliders NLO1 to NLOn of nonlinear optical materials are optically connected between the photonic crystals (KS1-KSn), said photonic crystals (KS1-KSn) being in the form of selective reflection gratings.

6. Arrangement for dispersion compensation according to claims 3 and 4,
**characterized in that**
the waveguide (2) consists of two opposing portions, the first portion being associated with the fibre optic input (E) and the second portion being associated with the fibre optic output (A); and **in that** disposed consecutively on the first fibre portion (2) are at least two photonic crystals (KD1 and KD2) in the form of drop elements with outputs for the lateral rejection of signals of a wavelength; and **in that** disposed consecutively on the second fibre portion are at least two photonic elements (KA1; KA2) in the form of adders, wherein each of the photonic crystals (KD1; KD2) in the form of drop elements is optically connected via its output for lateral rejection to the opposing input of the photonic crystal (KA1; KA2) in the form of an adder.

7. Arrangement according to claims 3 and 6, **characterized in that**
for coarse and fine tuning of the negative dispersion of each individual wavelength, controllable dispersion sliders NLO1 to NLOn of nonlinear optical materials are optically incoupled into the optical connections between the laterally disposed outputs of the photonic crystals (KD1-KDn) in the form of drop elements and the photonic crystals (KA1-KAn) in the form of adders.

8. Arrangement according to claims 3 and 6, **characterized in that**
for simultaneous coarse and fine tuning of the negative dispersion for different wavelengths, controllable dispersion sliders (NLO1 to NL03) of nonlinearly optical material are optically incoupled into the first waveguide portion (2) before the photonic crystals (K3 to K4), said photonic crystals (K3 to K4) being in the form of drop filters.

## Revendications

1. Procédé de compensation de dispersion de signaux optiques conjointement émis sur des longueurs d'onde différentes,
**caractérisé en ce que** les signaux optiques émis sont insérés conjointement dans un montage constitué de cristaux photoniques (K1-Kn) optiquement reliés entre eux et disposés successivement sur au moins un guide d'ondes (2), **en ce que** dans chaque cristal photonique, seuls les signaux d'une même longueur d'onde sont réfléchis ou déviés, les signaux des autres longueurs d'onde passant sans affaiblissement au cristal photonique suivant,
la règle étant que, pour les signaux de chaque longueur d'onde, le trajet entre le lieu d'insertion et le lieu, dans le cristal photonique (K1-Kn) correspondant, où ils sont réfléchis ou déviés est affecté d'une dispersion négative, laquelle modifie ou annule entièrement la dispersion positive des signaux insérés, et que les signaux en résultant de toutes les longueurs d'onde sont ensuite retransmis conjointement.

2. Procédé selon la revendication 1, **caractérisé en ce que** des différences de dispersion peuvent être compensées par des compensateurs de dispersion (NLO1-NLOn) insérés dans le guide d'ondes (2), dans les limites prédéfinies par le compensateur de dispersion (NLO1-NLOn).

3. Dispositif de compensation de dispersion de signaux optiques conjointement émis sur des longueurs d'onde différentes, **caractérisé en ce qu'**il est constitué des cristaux photoniques successifs (K1-Kn), un cristal photonique (K1-Kn) étant assigné à chaque longueur d'onde en fonction de sa dispersion,
**en ce que** les cristaux photoniques (K1-Kn) sont disposés sur au moins un guide d'ondes optiques (2) commun,
**en ce que** chaque cristal photonique (K1-Kn) est réglé de telle façon qu'il réfléchit ou dévie les signaux d'une longueur d'onde et laisse passer sans affaiblissement les signaux d'autres longueurs d'onde, le trajet entre le lieu d'insertion et le lieu, dans le cristal photonique (K1-Kn) correspondant, où ils sont réfléchis ou déviés étant affecté, pour les signaux de chaque longueur d'onde, d'une dispersion négative, laquelle modifie ou annule entièrement la dispersion positive des signaux insérés, et
**en ce que** les cristaux photoniques sont reliés optiquement avec au moins un bloc, lequel met à nouveau à disposition pour retransmission les signaux réfléchis ou déviés de toutes les longueurs d'onde.

4. Dispositif de compensation de dispersion selon la revendication 3,
**caractérisé en ce qu**'il est constitué d'au moins deux cristaux photoniques (KS1 à KS2) disposés successivement sur un guide d'ondes et servant de filtres de réflexion sélectifs, lesquels sont reliés par un circulateur optique (1) avec l'entrée fibre optique (E) et la sortie fibre optique (A), et en ce que le premier cristal photonique (KS1) sert de filtre de réflexion pour la première longueur d'onde (λᵢ) et le deuxième cristal photonique (KS2) de filtre de réflexion pour la deuxième longueur d'onde (λᵢ₊₁).

5. Dispositif de compensation de dispersion selon les revendications 3 et 4,
**caractérisé en ce que** des compensateurs de dispersion réglables NLO1 à NLOn en matériaux optiques non linéaires sont insérés optiquement entre les cristaux photoniques (KS1-KSn) servant de grille de réflexion sélective pour l'ajustement simultané, grossier ou fin, de la dispersion négative pour différentes longueurs d'onde.

6. Dispositif de compensation de dispersion selon les revendications 3 et 4,
**caractérisé en ce que** le guide d'ondes (2) est constitué de deux parties opposées, la première étant assignée à l'entrée fibre optique (E) et la seconde à la sortie fibre optique (A), **en ce que** sont disposés successivement sur la première partie de la fibre (2) au moins deux cristaux photoniques (KD1 et KD2) servant de soustracteurs, avec des sorties pour l'éjection des signaux d'une même longueur d'onde, et **en ce que** sont disposés successivement sur la deuxième partie de la fibre (2) au moins deux éléments photoniques (KA1, KA2) servant d'additionneurs, chacun des cristaux photoniques (KD1, KD2) servant de soustracteurs étant relié optiquement par sa sortie pour éjection latérale avec l'entrée lui faisant face du cristal photonique (KA1, KA2) servant d'additionneur.

7. Dispositif selon les revendications 3 et 6,
**caractérisé en ce que,** pour l'ajustement grossier ou fin de la dispersion négative de chaque longueur d'onde, des compensateurs de dispersion réglables NLO1 à NLOn en matériaux optiques non linéaires sont insérés optiquement entre les sorties latérales des cristaux photoniques (KD1-KDn) servant de soustracteurs et les cristaux photoniques (KA1-KAn) servant d'additionneurs.

8. Dispositif selon les revendications 3 et 6,
**caractérisé en ce que**, pour l'ajustement simultané, grossier ou fin, de la dispersion négative pour différentes longueurs d'onde, des compensateurs de dispersion réglables (NLO1-NLO3) en matériaux optiques non linéaires sont insérés optiquement dans la première partie du guide d'ondes (2), devant les cristaux photoniques (K3 à K4) servant de filtres soustracteurs.
